# FASCICULE DE BREVET EUROPEEN

(11) **EP 2 724 988 B1**
(45) Date de publication et mention de la délivrance du brevet: **17.11.2021**
(21) Numéro de dépôt: 13190139.9
(22) Date de dépôt: 24.10.2013
(51) Int. Cl.: C02F 3/12, C02F 3/32

(54) **Traitement des eaux usées économe en énergie à l'aide de microalgues**
Energiesparende Abwasseraufbereitung mit Hilfe von Mikroalgen
Energy-saving wastewater treatment by means of microalgae

(30) Priorité: 24.10.2012 FR 1260123
(43) Date de publication de la demande: 30.04.2014
(73) Titulaire: SAUR, 92130 Issy-les-Moulineaux (FR)
(72) Inventeur: Reveau, Guillaume, 78280 Guyancourt (FR)
(74) Mandataire: Regimbeau

(56) Documents cités:
- EP-A1- 0 687 653
- JP-A- 2004 081 926
- US-A- 3 586 625
- US-A- 3 954 615
- US-A1- 2011 266 215
- MUNOZ R ET AL: "Algal-bacterial processes for the treatment of hazardous contaminants: A review", WATER RESEARCH, ELSEVIER, AMSTERDAM, NL, vol. 40, no. 15, 1 août 2006 (2006-08-01), pages 2799-2815, XP025039987, ISSN: 0043-1354, DOI: 10.1016/J.WATRES.2006.06.011 [extrait le 2006-08-01]
- None

## Description

### DOMAINE DE L'INVENTION

La présente invention se rapporte au domaine des procédés et installations de traitement des eaux usées et plus particulièrement a pour objectif de réduire la consommation énergétique desdits procédés.

### ETAT DE LA TECHNIQUE

Le traitement des eaux usées est une condition essentielle à la préservation de la qualité de nos ressources naturelles. Réalisé typiquement dans des stations d'épuration, le traitement des eaux usées a pour but d'éliminer les matières organiques polluantes des eaux résiduaires urbaines et industrielles. Après traitement, les eaux doivent satisfaire des normes chimiques et sanitaires, en particulier concernant la demande chimique en oxygène. De plus, dans les régions particulièrement sensibles à l'eutrophisation, les taux d'azote et de phosphore sont strictement contrôlés.

Le traitement des eaux usées en station d'épuration consiste généralement en une succession d'étapes de traitements, connus sous le nom de traitements primaires, secondaires et tertiaires. Avant traitement, les eaux usées peuvent être prétraitées par dégrillage, dessablage et/ou dégraissage. Ces prétraitements permettent de retirer des eaux usées les déchets insolubles, sables et graisses.

Le traitement primaire consiste en une décantation permettant de supprimer la majorité des matières en suspension.

Le traitement secondaire permet l'élimination des matières organiques polluantes ainsi que l'élimination de l'azote et du phosphore. Il peut être réalisé par voie biologique ou par voie physico-chimique, la première voie étant la plus répandue.

Le traitement tertiaire permet d'affiner le traitement des eaux usées et notamment d'éliminer certains éléments pathogènes. Il peut se faire par coagulation-floculation ou désinfection au chlore ou à l'ozone.

Le traitement secondaire par voie biologique des eaux usées se fait principalement au moyen de micro-organismes. Ces micro-organismes utilisent les matières organiques comme source de carbone et d'énergie. Ce traitement peut se faire par un procédé dit « à boues activées ». L'élimination des matières organiques polluantes est assurée par mise en contact des eaux usées avec un mélange riche en bactéries qui dégradent les matières organiques en suspension ou dissoutes. La dégradation de ces matières organiques va entraîner un développement des micro-organismes aérobies et une libération de dioxyde de carbone et d'eau. Le traitement par « boues activées » permet également le traitement de l'azote par nitrification-dénitrification. En présence d'oxygène, des bactéries autotrophes nitrifiantes transforment des ions ammonium en nitrates. Ces nitrates peuvent être ensuite convertis en azote gazeux par des bactéries hétérotrophes dénitrifiantes en milieu d'anoxie.

Le traitement des eaux usées par boues activées est réalisé dans des bassins d'aération. Afin de maintenir l'activité des bactéries et ainsi la dégradation des matières organiques et le traitement de l'azote, une aération importante du système est nécessaire. Cette aération peut être assurée en surface par des turbines, ou dans le fond par des rampes de distribution de bulles d'air alimentées par des surpresseurs ou compresseurs d'air.

Le brevet US 3,586,625 divulgue un procédé de traitement des eaux usées par boues activées. Des algues sont utilisées dans un séparateur API huile/eau qui sert au prétraitement des eaux usées.

Le traitement des eaux usées représente environ 34% du coût global de l'eau, soit une part non négligeable du coût de celle-ci. L'alimentation électrique des dispositifs nécessaires à l'aération des bassins de traitement représente l'essentiel de la part énergétique du traitement des eaux usées pour les petites stations d'épuration de tailles inférieures à 2000 équivalents habitants, qui compte pour 80% des coûts du traitement des eaux usées.

Des procédés de traitement des eaux moins demandeurs en énergie existent. Les lagunages, par exemple, reposent sur des phénomènes d'autoépuration naturelle. Un mélange de bactéries et d'algues assure le traitement des eaux usées. Les bactéries aérobies dégradent la matière organique et produisent du gaz carbonique, des métabolites simples et des sels minéraux qui s'ajoutent à ceux déjà présents dans les eaux usées. Les algues présentes dans l'eau vont utiliser la lumière solaire et se multiplier en assimilant le gaz carbonique, l'azote et le phosphore libérés par les bactéries. Ce cycle s'auto-entretient tant que le système reçoit de l'énergie solaire et de la matière organique. Plusieurs bassins fonctionnant en série sont généralement nécessaires pour assurer le traitement des eaux usées. Un premier bassin sert essentiellement à abattre la charge organique, un second bassin permet l'élimination de l'azote et du phosphore tandis qu'un troisième bassin affine le traitement. De manière avantageuse, le lagunage permet la production d'algues qui après collecte pourront être valorisées dans d'autres filières. Cependant, même si le lagunage présente l'avantage d'être simple et d'assurer de bonnes performances épuratoires, l'importante empreinte au sol des bassins, la nécessité d'un long temps de séjour pour les eaux usées et la sensibilité du procédé aux conditions climatiques freinent la généralisation du lagunage au traitement des eaux usées. Il s'avère également que les collectes d'algues ne sont pas suffisamment massives pour être d'une bonne rentabilité économique.

Les procédés de traitement des eaux usées par lagunage à haut rendement algal permettent de pallier les inconvénients décrits ci-dessus. Ces systèmes développés dans les années 1990 permettent à la fois de réduire la surface occupée au sol et d'augmenter la production de biomasse. Des procédés classiques de lagunage à haut rendement algal sont par exemple décrits dans le brevet US 3,954,615 ou dans la demande de brevet EP 0 687 653 A1.

Tout comme le lagunage décrit ci-dessus, le lagunage à haut rendement algal repose sur un traitement des eaux usées par un mélange de bactéries et d'algues opérant en symbiose. Il s'agit d'un système artificiel en milieu ouvert, généralement bâti en forme de serpentin à plusieurs canaux, dans lequel circule de l'eau sur une faible profondeur. Cette eau est généralement mise en circulation au moyen d'une roue à aube. L'eau circule lentement de manière à assurer la mise en suspension des algues et favoriser les échanges gazeux. La dépollution des eaux usées se fait par des mécanismes similaires aux mécanismes mis en jeu dans les bassins de lagunage classiques. Cependant, les lagunages à haut rendement algal ne permettent pas d'atteindre complètement les objectifs réglementaires des eaux usées. En effet, le lagunage à haut rendement, bien qu'il traite une partie de l'azote, ne permet pas d'atteindre, par exemple, les normes réglementaires de sortie pour l'azote.

Un besoin existe donc pour la mise au point d'un procédé de traitement des eaux usées qui soit moins demandeur en énergie et permette à la fois d'obtenir une qualité et quantité d'effluents stables dans le temps.

Les inventeurs ont ainsi développé un procédé de traitement des eaux usées qui permet de réduire de 20 à 80% les coûts énergétiques du traitement des eaux usées, notamment de réduire de 20 à 80% les coûts énergétiques liés à l'aération des bassins d'aération dans les procédés impliquant un traitement par boues activées. Le procédé selon la présente invention utilise la synergie développée entre les algues en culture et les bactéries pour obtenir un gain énergétique et donc un gain sur le coût global du traitement des eaux usées. De manière avantageuse, le procédé selon l'invention permet une collecte massive d'algues qui pourront être valorisées dans de nombreuses filières.

### RESUME DE L'INVENTION

L' invention porte sur un procédé de traitement des eaux usées comprenant séquentiellement :
a. un prétraitement comprenant au moins une étape de dégrillage ;
b. un traitement des eaux prétraitées dans un bassin ouvert de lagunage à haut rendement algal dans lequel les eaux prétraitées circulent en circuit fermé et dans lequel un mélange de bactéries et d'algues en culture est présent, le bassin comprenant un hauteur d'eau variant de 10 à 70 cm;
c. un traitement dans un bassin d'aération par des boues activées ; et
d. une séparation des boues et des eaux traitées, de préférence par clarification.

De plus, l'invention porte sur une installation de traitement des eaux usées comprenant d'amont en aval :
a. une unité de prétraitement des eaux usées comprenant au moins un moyen de dégrillage ;
a'. optionnellement un bassin primaire de décantation ;
b. un bassin ouvert de lagunage à haut rendement algal dans lequel les eaux prétraitées circulent en circuit fermé et dans lequel un mélange de bactéries et d'algues en culture est présent, le bassin comprenant un hauteur d'eau variant de 10 à 70 cm ;
b'. optionnellement une unité de séparation des algues et des eaux traitées par lagunage ;
c. un bassin d'aération à boues activées ;
d. un dispositif de séparation des eaux traitées et des boues, de préférence un clarificateur.

### DESCRIPTION DES FIGURES

La figure 1 représente de manière schématique un bassin de lagunage à haut rendement algal.
La figure 2 représente de manière schématique un mode de réalisation du procédé selon la présente invention. Les étapes encadrées en pointillés sont optionnelles.
La figure 3 représente de manière schématique un mode de réalisation du procédé selon la présente invention. Les étapes encadrées en pointillés sont optionnelles.

### DESCRIPTION DETAILLEE DE L'INVENTION

Le procédé de traitement des eaux usées selon la présente invention comprend un prétraitement des eaux usées suivi d'un traitement secondaire des eaux usées prétraitées.

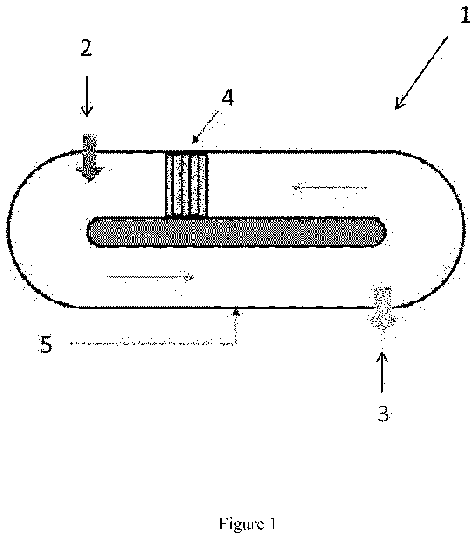

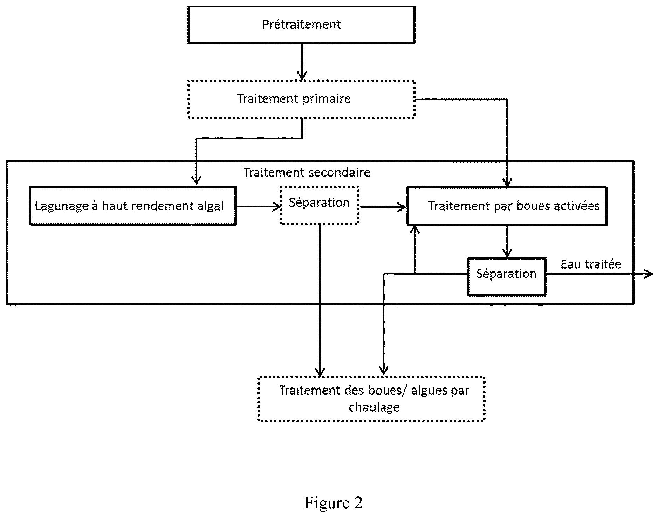

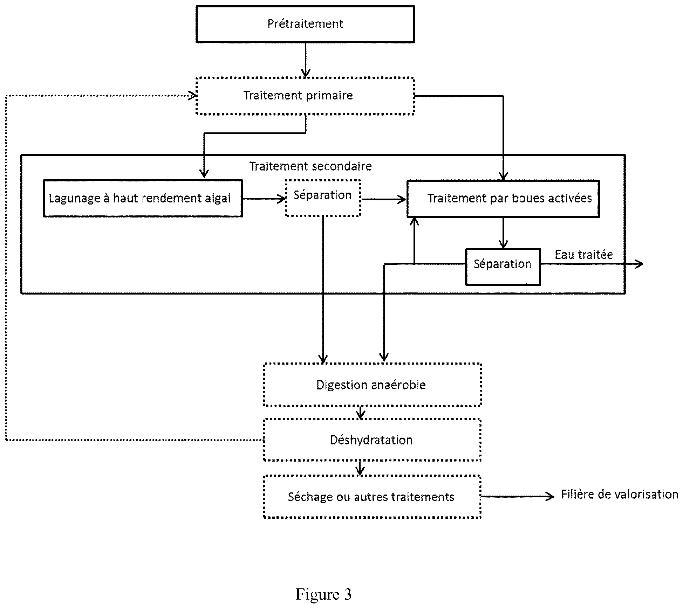

Le traitement secondaire des eaux usées prétraitées comprend un traitement dans un bassin de lagunage à haut rendement algal, tel qu'illustré par exemple à la figure 1, suivi d'un traitement des effluents dans un bassin d'aération par boues activées et enfin une séparation des boues et des eaux traitées, telle qu'une clarification. Les figures 2 et 3 représentent schématiquement des procédés de traitement des eaux usées selon la présente invention.

### Prétraitement (étape a) et traitement primaire (étape a')

Le prétraitement des eaux usées comprend une étape de dégrillage et éventuellement les étapes de dessablage et/ou dégraissage des eaux usées. Les eaux usées prétraitées ainsi obtenues peuvent être directement dirigées vers le bassin de lagunage à haut rendement algal ou elles peuvent au préalable être décantées. Le traitement primaire des eaux usées prétraitées par décantation permet d'éliminer 80% des matières en suspension et d'abaisser la charge organique. Le traitement primaire par décantation permet ainsi d'améliorer de 10 à 30% les performances du lagunage à haut rendement algal sur l'élimination de l'azote et la demande chimique en oxygène. Une transmittance de l'eau suffisante pour le bon fonctionnement du lagunage à haut rendement algal est ainsi obtenue. Les boues primaires obtenues suite à la décantation peuvent être dirigées vers des procédés classiques de traitement des boues, tels que les procédés intégrant un chaulage (figure 2) ou une digestion anaérobie (figure 3) ou un procédé de séchage de boues tel que le lit de séchage optimisé par exemple.

### Traitement secondaire (étapes b, c et d)

Les eaux prétraitées, et optionnellement décantées, sont ensuite dirigées dans un bassin de lagunage à haut rendement algal (étape b). Les bassins de lagunage à haut rendement algal sont bien connus de l'homme du métier. Typiquement, les bassins de lagunage à haut rendement algal sont des bassins dans lesquels les eaux circulent en circuit fermé. Les bassins selon la présente invention sont ouverts (à la surface du bassin, les eaux sont en contact avec l'air et se distinguent ainsi des enceintes fermées, telles que les bioréacteurs)..Les dimensions du bassin sont choisies en fonction du volume d'eaux usées à traiter. La profondeur du bassin est telle que la hauteur d'eau puisse varier de 10 à 70 cm. La hauteur d'eau est choisie de manière à ce que la diffusion des rayons demeure optimale. Le rapport longueur/largeur du bassin varie généralement de 6 à 10 mais peut aller jusqu'à 20. La surface au sol occupé par le bassin varie généralement de 0.5 à 8 m² par équivalent habitant.

Dans le bassin, un mélange de bactéries et d'algues est présent pour assurer la dépollution des eaux usées. Les espèces d'algues mises en culture sont typiquement choisies pour leur productivité élevée à partir de forte charge en matières organiques, azote ammoniacal et en phosphate, leur bonne tolérance aux variations journalières et saisonnières, leur capacité à s'auto-agréger pour faciliter leur récolte ultérieure et leurs combinaisons. Les algues mises en culture incluent de préférence les algues appartenant aux classes des chlorophycées, euglenophycées, diatomées, cyanophycées, et tout particulièrement les algues du genre chlorelles, coelestrum et scenedesmus. Les espèces d'algues chlorophylliennes sont préférées puisqu'elles sont très actives dans les procédés de dépollution.

Dans le bassin, les eaux à traiter sont généralement agitées. Typiquement, la puissance d'agitation varie de 2 à 10 W/m³. L'agitation des eaux peut se faire au moyen d'une roue à aube ou d'une pompe ou d'une éolienne couplée à un système d'agitation d'eau. Ce dernier système pourra être privilégié dans certains cas par souci d'économie d'énergie.

Les vitesses d'écoulement et d'agitation dans le bassin sont typiquement choisies de manière à éviter la sédimentation de la matière organique et à maintenir un brassage des algues pour que l'ensemble de la masse algale ait accès à la surface du bassin et donc à la lumière.

Les algues pouvant supporter beaucoup plus de gaz carbonique que la faible part contenue dans l'atmosphère (0.036%), il est ainsi possible d'apporter du gaz carbonique dans le bassin de lagunage afin d'augmenter la croissance algale. En pratique, l'injection de CO₂ gazeux dans le système provoque une acidification du milieu. Il ne faudra pas, dans ces cas là, que le pH du milieu descende en-dessous de 7.

Un exemple de bassin de lagunage à haut rendement algal est illustré à la figure 1. Le bassin **1** présente une arrivée **2** des eaux usées et une sortie **3** des eaux usées partiellement traitées en mélange avec les algues. Les eaux sont agitées au moyen d'une roue à aube **4.** Du gaz carbonique **5** est apporté dans le bassin.

Un ou plusieurs dispositifs de contrôle peuvent être mis en place dans le bassin afin d'ajuster, voire même d'augmenter, les performances du lagunage à haut rendement algal. Le dispositif, ou les dispositifs, de contrôle peuvent permettre d'ajuster la hauteur d'eau et/ou le temps de séjour hydraulique dans le système et/ou de contrôler et réguler la concentration en certains micro ou macroéléments essentiels à la croissance des algues ou à l'élimination des polluants dans le bassin de lagunage à haut rendement algal.

La hauteur d'eau dans le bassin de lagunage à haut rendement algal peut être notamment adaptée en fonction des conditions climatiques, et tout particulièrement en fonction de l'intensité lumineuse. Le contrôle de la hauteur d'eau dans le bassin permet de contrôler l'activité photosynthétique. Par exemple, la hauteur d'eau dans le bassin peut être augmentée afin d'éviter d'atteindre le point de saturation de l'activité photosynthétique au-delà duquel apparaît une photo-inhibition entraînant une dégradation des activités biochimiques et une baisse de la productivité. La hauteur d'eau dans le bassin varie de 10 cm à 70 cm. Elle est en moyenne de 30 cm.

Les concentrations en macro et microéléments dans le bassin peuvent être mesurées et ajustées de manière à satisfaire aux besoins du système. Tout particulièrement, les concentrations en bicarbonates, magnésium, potassium et éventuellement calcium peuvent être contrôlées et régulées dans le bassin. Ainsi, lorsque les concentrations en bicarbonates, magnésium, potassium et éventuellement calcium descendent en dessous de valeurs seuils pré-établies, ces éléments pourront être ajoutés dans le bassin afin de répondre aux besoins du système.

Les bicarbonates sont nécessaires à l'activité photosynthétique des algues. Ainsi, en s'assurant que la concentration de bicarbonates est toujours supérieure à une concentration seuil de 150 mg/L, l'activité photosynthétique des algues est maintenue et les rendements d'élimination de l'azote augmentés. De préférence, la concentration en bicarbonates est supérieure à 150 mg/L, soit 12,3 °f en Titre Alcalimètrique Complet (TAC). Elle varie typiquement de 150 mg/L à 300 mg/L.

Le magnésium est nécessaire au développement des algues puisqu'il s'agit d'un élément constitutif des chlorophylles a, b et d. La chlorophylle a est un pigment principal servant pour la photosynthèse. Ainsi, en s'assurant que la concentration de magnésium est toujours supérieure à une concentration seuil de 10 mg/L, l'activité photosynthétique des algues est maintenue et les rendements d'élimination de l'azote augmentés. De préférence, la concentration en magnésium varie de 10 à 80 mg/L.

La concentration en calcium dans le système peut être également contrôlée et ajustée. Le calcium intervient dans la voie d'élimination du phosphore. Contrairement à l'azote, le phosphore ne peut pas être éliminé par voie gazeuse et les algues sont peu demandeuses en phosphore comparées aux quantités présentes dans les eaux usées. La voie d'élimination du phosphore dans le système est typiquement par précipitation au calcium quand le pH du milieu est supérieur à 8, ce qui se produit dans le système tous les jours de l'année grâce à l'activité photosynthétique des algues. Ainsi, en s'assurant que la quantité de calcium biodisponible est toujours en grand excès par rapport aux quantités de phosphates, le rendement d'élimination du phosphore peut être stabilisé, voire augmenté. De préférence, la concentration en calcium est supérieure à 50 mg/L. Typiquement elle varie de 50 à 300 mg/L.

En absence de concentrations importantes en CO₂ dissous dans l'eau du bassin de lagunage, le potassium intervient au niveau des membranes plasmiques des microalgues chlorophyliennes et notamment au niveau du fonctionnement de certains transporteurs d'anions tels que les bicarbonates par exemple. Le fonctionnement de ces transporteurs nécessite à la fois une énergie biochimique (l'ATP : Adénosine TriPhosphate) et du potassium pour pouvoir transférer ces bicarbonates à l'intérieur de la cellule algale. Une fois entrés dans la cellule, les bicarbonates vont ensuite être utilisés pour la photosynthèse dans le chloroplaste. On observe ainsi une consommation du potassium par les microalgues dans le bassin de lagunage à haut rendement algal. Ainsi la concentration en potassium dans le système peut également être contrôlée et ajustée afin de s'assurer que la concentration en ions potassium ne soit pas un facteur limitant à la croissance des algues. Idéalement, la concentration en ions potassium est supérieure à 50 mg/L. Typiquement, elle varie de 50 à 200mg/L.

D'autres macro et micronutriments essentiels à la croissance des algues comme le zinc, le soufre, le fer, le manganèse, le silicium, le bore, le molybdène, le cuivre ou le cobalt pourront être ajoutés dans le milieu en fonction des besoins. Leurs concentrations respectives pourront ainsi être contrôlées et régulées dans le bassin.

Les contrôles des concentrations en micro ou macroéléments peuvent être réalisés de manière ponctuelle, par exemple une fois par semaine.

Le temps de séjour hydraulique dans le bassin de lagunage à haut rendement algal varie typiquement de 1 à 12 jours, tel que de 2 à 10 jours, de 3 à 9 jours. Le temps de séjour dans le bassin peut être adapté en fonction des conditions climatiques. Généralement, le temps de séjour sera plus long en hiver qu'en été puisque les températures influent sur les performances du système. Ainsi, le temps de séjour sera typiquement de 8 jours en hiver et de 4 jours en été. Cependant, pour s'affranchir au maximum des variations de température de l'eau et ainsi augmenter l'inertie thermique de l'eau, le bassin de lagunage est typiquement enterré.

Le temps de séjour hydraulique ainsi que la puissance d'agitation peuvent être sensiblement réduits en éliminant les matières en suspension dans l'effluent à traiter. Ainsi, avant d'être dirigées dans le bassin de lagunage à haut rendement algal, les eaux usées prétraitées sont de préférence décantées dans un décanteur primaire. Cette décantation permet d'éliminer 80% des matières en suspension et d'abaisser la charge organique. L'élimination des matières en suspension permet avantageusement de favoriser la pénétration de la lumière dans le bassin de lagunage à haut rendement algal et ainsi d'augmenter l'activité du système.

Le temps de séjour hydraulique peut également être réduit lorsque les concentrations en micro et macroéléments sont régulées dans le bassin de lagunage.

Le lagunage à haut rendement algal permet d'éliminer de 30 à 40% de l'azote entrant dans le système et de 30 à 40% de la demande chimique en oxygène entrante dans le système. De plus, le lagunage à haut rendement algal permet de transformer de 30 à 40% d'azote supplémentaire en oxydant les formes réduites de l'azote (ions ammonium notamment), ce qui va permettre une économie d'énergie substantielle sur la suite du traitement.

Le suivi des concentrations en micro et/ou macroéléments dans le bassin de lagunage à haut rendement algal tel que décrit ci-dessus permet de manière générale d'optimiser les performances de traitement des eaux usées dans un tel bassin. Ainsi, une méthode d'optimisation des performances de traitement d'un bassin de lagunage à haut rendement algal comprend les étapes de :
- mesure de la concentration en un micro ou macroélément dans ledit bassin;
- comparaison de la concentration mesurée à une concentration seuil prédéterminée pour ledit micro ou macroélément ;
- ajout du micro ou macroélément afin que la concentration en micro ou macroélément dans ledit bassin soit supérieure à la concentration seuil prédéterminée si la concentration mesurée est inférieure à la concentration seuil prédéterminée.

Le ou les micro ou macroélément(s) sont de préférence choisi parmi le bicarbonate, le magnésium, le calcium, le potassium, le zinc, le soufre, le fer, le manganèse, le silicium, le bore, le molybdène, le cuivre et le cobalt. Les concentrations seuils prédéterminées pour le ou les macro ou microélément(s) peuvent être telles que décrites ci-dessus. Ainsi, la concentration seuil en bicarbonates peut être de 150 mg/L, la concentration seuil en magnésium peut être de 10 mg/L, la concentration seuil en calcium peut être de 50 mg/L ou la concentration seuil en potassium peut être de 50 mg/L. Les concentrations typiques ou préférées pour le ou les macro ou microélément(s) peuvent être telles que décrites ci-dessus. La mesure de la concentration du micro ou macroélément peut être réalisée de manière ponctuelle, telle qu'une fois par semaine. Cette méthode d'optimisation des performances de traitement d'un bassin de lagunage à haut rendement algal peut être mise en œuvre dans tous procédés de traitement des eaux usées comprenant un lagunage à haut rendement algal. Les caractéristiques du bassin de lagunage peuvent être telles que décrites ci-dessus. Elle est particulièrement avantageuse dans un procédé de traitement des eaux usées selon la présente invention, c'est-à-dire un procédé comprenant un prétraitement comprenant au moins une étape de dégrillage, un traitement dans un bassin de lagunage à haut rendement algal, un traitement dans un bassin par des boues activées et une séparation des boues et des eaux traitées.

Après traitement par lagunage à haut rendement algal, les effluents sont dirigés vers un bassin d'aération où ils sont traités par des boues activées (étape c). Les bassins et procédés de traitement des eaux usées par boues activées sont bien connus de l'homme du métier.

Typiquement, les boues activées renferment une variété de microorganismes. Les principales espèces microscopiques présentes dans les boues sont les protozoaires, répartis en trois classes : les flagellés, les sarcodines et les ciliés (dont les vorticelles) ; les métazoaires comme les rotifères ou les nématodes et les bactéries au sens large, qui peuvent être aérobies ou anaérobies stricte ou non. On notera également la présence de bactéries nitrifiantes telles que nitrobacter ou nitrosomonas, et de bactéries dénitrifiantes.

Les effluents traités par les boues activées peuvent comprendre des algues en suspension dans les eaux usées partiellement traitées ou uniquement des eaux usées partiellement traitées. En effet, avant d'être dirigées vers les bassins d'aération, les eaux usées partiellement traitées et les algues peuvent être séparées. La séparation peut être réalisée au moyen d'un procédé de coagulation-floculation-décantation ou un procédé de coagulation-floculation-flottation. La coagulation-floculation-décantation peut être réalisée au chlorure ferrique qui permet de manière avantageuse de piéger les phosphates et ainsi de compléter le traitement du phosphore dans les eaux usées. Les algues collectées lors de la séparation peuvent être dirigées vers une filière de traitement des algues, stabilisées et ensuite valorisées. Les algues collectées après séparation peuvent également être dirigées vers une unité de digestion anaérobie où la digestion de ces algues produira du méthane.

Le temps de séjour dans le bassin d'aération est typiquement de un jour.

Dans le procédé selon l'invention, le traitement par boues activées permet de traiter principalement la demande chimique en oxygène, puisque les effluents ont déjà été débarrassés d'une majeure partie de l'azote par le système de lagunage à haut rendement algal. Le fait que l'azote soit éliminé en majeur partie par le système de lagunage à haut rendement algal, et ce à moindre coût, permet d'injecter moins d'air dans le procédé de traitement par boues activées et ainsi de réaliser des économies substantielles. Ainsi, le procédé selon la présente invention permet de réduire de 20 à 80% les coûts énergétiques liés à l'aération des bassins d'aération. Avantageusement, le procédé selon la présente invention permet de réduire d'au moins 45% l'apport d'oxygène par rapport à un système classique d'épuration par boues activées.

Dans une dernière étape, après traitement par les boues activées, les eaux traitées sont séparées des boues (étape d). La séparation des eaux traitées et des boues peut être faite par clarification (séparation par gravitation) ou par des membranes. De préférence, la séparation est faite par clarification.

Le temps de séjour dans le clarificateur est typiquement inférieur à un jour.

Les eaux traitées obtenues après séparation (par exemple après clarification ou emploi de membranes) satisfont les normes de rejet avec DBO₅<25 mg/L (demande biologique en oxygène mesurée à 5 jours), DCO<125 mg/L (demande chimique en oxygène), MES<35 mg/L (matières en suspension), NGL<10 mg/L (azote global), Pt<1 mg/L (phosphore total), et des rendements d'abattement de la pollution respectivement de 80% pour la DBO₅, de 75% pour la DCO, de 90% en MES de 70% pour l'azote global et de 80% pour le phosphore total, soit les valeurs de l'arrêté du 22 Juin 2007 les plus contraignantes, arrêté fixant les valeurs seuils à atteindre en sortie de station d'épuration. Elles pourront être rejetées directement dans le milieu naturel ou subir des traitements tertiaires complémentaires.

Les boues obtenues après séparation peuvent être dirigées vers des procédés classiques de traitement des boues, tels que les procédés intégrant un chaulage (figure 2) ou une digestion anaérobie (figure 3). Les boues peuvent être déshydratées, par exemple par centrifugation, filtre-presse, filtre à bandes presseuses et ensuite être valorisées en agriculture par épandage ou compostage.

Les algues obtenues après séparation peuvent également être traitées par chaulage (figure 2) ou subir une digestion anaérobie (figure 3).

Les figures 2 et 3 représentent des procédés de traitement des eaux usées selon la présente invention. Dans une première étape, les eaux usées sont prétraitées et ensuite dirigées vers le bassin de lagunage à haut rendement algal. Avant d'être dirigées vers le bassin de lagunage à haut rendement algal, les eaux prétraitées peuvent éventuellement subir un traitement primaire. Les boues collectées lors de ce traitement primaire peuvent être dirigées vers le bassin d'aération par boues activées. Après traitement par lagunage à haut rendement algual, le mélange des eaux partiellement traitées et des algues peut être dirigé vers le bassin d'aération par boues activées. Au préalable, les eaux et les algues peuvent être séparées. Les algues collectées peuvent alors être traitées par chaulage (figure 2) ou subir une digestion anaérobie (figure 3) et ainsi produire du méthane. Après traitement par les boues activées, les eaux et les boues sont séparées permettant l'obtention des eaux traitées. Les boues collectées peuvent alors être traitées par chaulage (figure 2) ou subir une digestion anaérobie (figure 3), suivie par exemple d'une déshydrataion et d'un séchage. Les eaux obtenues suite à l'étape de déshydratation peuvent être redirigées dans la filière de traitement des eaux usées, et par exemple subir un traitement primaire.

Le procédé selon la présente invention peut être mise en œuvre dans une installation de traitement des eaux usées comprenant une unité de prétraitement des eaux usées, optionnellement un bassin primaire de décantation, un bassin de lagunage à haut rendement algal, un bassin d'aération à boues activées et un dispositif de séparation des eaux traitées et des boues, de préférence un clarificateur. L'installation de traitement des eaux usées pourra également comprendre une unité de séparation des eaux traitées et des algues en sortie de bassin de lagunage à haut rendement algal. Les algues collectées après séparation pourront être dirigées vers une unité de digestion anaérobie, qui peut être partie intégrante de cette installation de traitement des eaux usées, où leur digestion servira à la production de méthane.

### EXEMPLE

Des eaux usées brutes sont traitées selon le procédé de la présente invention. Dans une première étape, les eaux usées brutes sont prétraitées par dégrillage. Elles sont ensuite décantées. Les eaux usées prétraitées et décantées sont ensuite dirigées vers un bassin de lagunage à haut rendement algal. Les configurations du lagunage à haut rendement sont les suivantes en fonction de la saison:

| | Hiver (Décembre-Février) | Intersaison (Mars-Mai et Septembre-Novembre) | Eté |
|---|---|---|---|
| Temps de séjour hydraulique (en jours) | 8 | 6 | 4 |
| Hauteur d'eau (cm) | 30 | | |
| Puissance d'agitation (W/m3) | 5 | | |

Après un temps de séjour variable selon les saisons dans le bassin de lagunage à haut rendement algal, les eaux usées sont traitées par boues activées et enfin les eaux traitées sont séparées des boues.

Les propriétés des eaux avant, après traitement par lagunage à haut rendement algal et après traitement par boues activées sont telles que récapitulées dans le tableau suivant :

| | Eaux usées brutes | Eaux usées prétaitées par un dégrillage et une décantation primaire par le LHRA | Eaux usées traitées par les boues activées à aération prolongée (charge massique <0,1 kg DB05/kg MVS/j) |
|---|---|---|---|
| MES tot (mg/L) | 250 (de 100 à 400) | 112 | <35 |
| DBO₅ (mg/L) | 325 (de 150 à 500) | 76 | <25 |
| DCO (mg/L) | 650 (de 300 à 1000) | 216 | <125 |
| NTK (mg/L) | 65 (de 30 à 100) | 16.5 | <10 |
| N-NH₄⁺ (mg/L) | 50 (de 20 à 80) | 4.5 | <2 |
| N-NO₂⁻ (mg/L) | <1 | 2.2 | <1 |
| N-NO₃⁻ (mg/L) | <1 | 8.5 | <1 |
| Pt (mg/L) | 15 (de 10 à 25) | 4.8 | <1 |

Les eaux obtenues *in fine* satisfont les normes réglementaires en vigueur.

## Revendications

1. Procédé de traitement des eaux usées comprenant séquentiellement :
a. un prétraitement des eaux usées comprenant au moins une étape de dégrillage ;
b. un traitement des eaux prétraitées dans un bassin ouvert de lagunage à haut rendement algal dans lequel les eaux prétraitées circulent en circuit fermé et dans lequel un mélange de bactéries et d'algues en culture est présent, le bassin comprenant une hauteur d'eau variant de 10 à 70 cm;
c. un traitement dans un bassin d'aération par des boues activées ; et
d. une séparation des boues et des eaux traitées, de préférence par clarification.

2. Procédé selon la revendication 1 dans lequel le prétraitement a) des eaux usées comprend en outre un dessablage et/ou dégraissage.

3. Procédé selon la revendication 1 ou 2 dans lequel un traitement primaire a') par décantation est réalisé avant ledit traitement b) dans le bassin de lagunage à haut rendement algal et après ledit prétraitement a).

4. Procédé selon l'une des revendications précédentes dans lequel la hauteur d'eau du bassin de lagunage à haut rendement algal est modulée en fonction de l'intensité lumineuse.

5. Procédé selon l'une des revendications précédentes dans lequel les concentrations en micro ou macroéléments nécessaires à la croissance des algues ou à l'élimination des polluants tels que les bicarbonates, le potassium, le magnésium et/ou le calcium sont contrôlées et régulées dans le bassin pour optimiser les performances du lagunage à haut rendement algal.

6. Procédé selon la revendication 5 dans lequel la concentration en bicarbonates est régulée par addition de bicarbonates de manière à ce que la concentration en bicarbonates dans le bassin de lagunage soit supérieure à 150 mg/L.

7. Procédé selon la revendication 5 ou 6 dans lequel la concentration en magnésium est régulée par addition de magnésium de manière à ce que la concentration en magnésium soit supérieure à 10 mg/L.

8. Procédé selon l'une des revendications 5 à 7 dans lequel la concentration en calcium est régulée par addition de calcium de manière à ce que la concentration en calcium soit supérieure à 50 mg/L.

9. Procédé selon l'une des revendications précédentes dans lequel le temps de séjour hydraulique dans le bassin de lagunage à haut rendement algal varie de 1 à 12 jours, typiquement est de huit jours en hiver et de quatre jours en été.

10. Procédé selon l'une des revendications précédentes dans lequel le bassin de lagunage à haut rendement algal comprend des algues choisies parmi les chlorophycées, euglenophycées, diatomées, cyanophycées et leurs combinaisons.

11. Procédé selon l'une des revendications précédentes dans lequel, avant traitement c) des eaux usées dans le bassin d'aération, les eaux et les algues sont séparées.

12. Procédé selon la revendication 11 dans lequel les algues collectées lors de la séparation sont digérées par voie anaérobie.

13. Procédé selon l'une des revendications précédentes dans lequel le bassin de lagunage a une hauteur variant de 10 à 70 cm et un rapport longueur/largeur variant de 6 à 10.

14. Procédé selon l'une des revendications précédentes dans lequel les boues obtenues après décantation a') et/ou séparation d) sont traitées par un procédé intégrant un chaulage ou un procédé intégrant une digestion anaérobie.

15. Installation de traitement des eaux usées comprenant d'amont en aval :
a. une unité de prétraitement des eaux usées comprenant au moins un moyen de dégrillage ;
a'. optionnellement un bassin primaire de décantation ;
b. un bassin ouvert de lagunage à haut rendement algal dans lequel les eaux prétraitées circulent en circuit fermé et dans lequel un mélange de bactéries et d'algues en culture est présent, le bassin comprenant une hauteur d'eau variant de 10 à 70 cm ;
b'. optionnellement une unité de séparation des algues et des eaux traitées par lagunage;
c. un bassin d'aération à boues activées ;
d. un dispositif de séparation des eaux traitées et des boues, de préférence un clarificateur.

## Patentansprüche

1. Verfahren zur Abwasserbehandlung, das nacheinander umfasst:
a. eine Vorbehandlung des Abwassers umfassend mindestens einen Siebschritt;
b. eine Behandlung des vorbehandelten Wassers in einem offenen Klärbecken mit hoher Algenausbeute, in dem das vorbehandelte Wasser in einem geschlossenen Kreislauf zirkuliert und in dem ein Gemisch aus Bakterien und Algen als Kultur vorhanden ist, wobei das Becken eine Wasserhöhe von 10 bis 70 cm aufweist;
c. eine Behandlung in einem Belebungsbecken durch Belebtschlamm; und
d. eine Trennung von Schlamm und behandeltem Wasser, vorzugsweise durch Klärung.

2. Verfahren nach Anspruch 1, wobei die Vorbehandlung a) des Abwassers ferner ein Entfernen von Sand und/oder Fett umfasst.

3. Verfahren nach Anspruch 1 oder 2, wobei vor der Behandlung b) in dem Klärbecken mit hoher Algenausbeute und nach der Vorbehandlung a) eine Erstbehandlung a') durch Abscheiden durchgeführt wird.

4. Verfahren nach einem der vorstehenden Ansprüche, wobei die Wasserhöhe des Klärbeckens mit hoher Algenausbeute in Abhängigkeit von der Lichtintensität moduliert wird.

5. Verfahren nach einem der vorstehenden Ansprüche, wobei die für das Algenwachstum oder die Beseitigung von Schadstoffen wie Bikarbonat, Kalium, Magnesium und/oder Kalzium notwendigen Konzentrationen an Mikro- oder Makroelementen im Becken kontrolliert und reguliert werden, um die Leistung der Klärung mit hoher Algenausbeute zu optimieren.

6. Verfahren nach Anspruch 5, wobei die Bikarbonatkonzentration durch Zugabe von Bikarbonaten so reguliert wird, dass die Bikarbonatkonzentration in dem Klärbecken höher als 150 mg/l ist.

7. Verfahren nach Anspruch 5 oder 6, wobei die Magnesiumkonzentration durch Zugabe von Magnesium so reguliert wird, dass die Magnesiumkonzentration höher als 10 mg/l ist.

8. Verfahren nach einem der Ansprüche 5 bis 7, wobei die Kalziumkonzentration durch Zugabe von Kalzium so reguliert wird, dass die Kalziumkonzentration höher als 50 mg/l ist.

9. Verfahren nach einem der vorstehenden Ansprüche, wobei die hydraulische Verweilzeit in dem Klärbecken mit hoher Algenausbeute 1 bis 12 Tage beträgt, typischerweise 8 Tage im Winter und 4 Tage im Sommer.

10. Verfahren nach einem der vorstehenden Ansprüche, wobei das Klärbecken mit hoher Algenausbeute Algen umfasst, die ausgewählt sind aus Chlorophyceae, Euglenophyceae, Diatomeen, Cyanophyceae und Kombinationen davon.

11. Verfahren nach einem der vorstehenden Ansprüche, wobei das Wasser und die Algen vor der Behandlung c) des Abwassers in dem Belebungsbecken getrennt werden.

12. Verfahren nach Anspruch 11, wobei die bei der Trennung gesammelten Algen anaerob abgebaut werden.

13. Verfahren nach einem der vorstehenden Ansprüche, wobei das Klärbecken eine Höhe zwischen 10 und 70 cm und ein Verhältnis von Länge zu Breite zwischen 6 und 10 aufweist.

14. Verfahren nach einem der vorstehenden Ansprüche, wobei der nach dem Abscheiden a') und/oder dem Trennen d) erhaltene Schlamm durch ein Verfahren mit integrierter Kalkung oder ein Verfahren mit integrierter anaerober Faulung behandelt wird.

15. Anlage zur Abwasserbehandlung, die in stromabwärtiger Richtung umfasst:
a. eine Einheit zur Abwasservorbehandlung mit mindestens einer Siebvorrichtung;
a'. gegebenenfalls ein erstes Absetzbecken;
b. ein offenes Klärbecken mit hoher Algenausbeute, in dem das vorbehandelte Wasser in einem geschlossenen Kreislauf zirkuliert und in dem ein Gemisch aus Bakterien und Algen als Kultur vorhanden ist, wobei das Becken eine Wasserhöhe von 10 bis 70 cm aufweist;
b'. gegebenenfalls eine Einheit zur Trennung der Algen von dem im Klärbecken behandelten Wasser;
c. ein Belebungsbecken mit Belebtschlamm;
d. eine Vorrichtung zur Trennung von behandeltem Wasser und Schlamm, vorzugsweise ein Klärbecken.

## Claims

1. A wastewater treatment process comprising sequentially:
a. pretreatment of the wastewater comprising at least one screening step;
b. treatment of the pretreated water in an open high-rate algal pond in which the pretreated water circulates in a closed circuit and in which a mixture of bacteria and algae in culture is present, the pond comprising a water height varying from 10 to 70 cm;
c. treatment in an aeration tank with activated sludge; and
d. separation of the sludge from the treated water, preferably by clarification.

2. The process as claimed in claim 1 wherein the pretreatment a) of the wastewater further comprises grit and/or grease removal.

3. The process as claimed in claim 1 or 2 wherein a primary treatment a') by settling is carried out before said treatment b) in the high-rate algal pond and after said pretreatment a).

4. The process as claimed in one of the preceding claims wherein the water height of the high-rate algal pond is adjusted as a function of the light intensity.

5. The process as claimed in one of the preceding claims wherein the concentrations of micro or macro elements necessary for algal growth or for removal of pollutants such as bicarbonates, potassium, magnesium and/or calcium are monitored and regulated in the pond to optimize the performance of the high-rate algal pond.

6. The process as claimed in claim 5 wherein the bicarbonate concentration is regulated by adding bicarbonates such that the bicarbonate concentration in the pond is greater than 150 mg/L.

7. The process as claimed in claim 5 or 6 wherein the magnesium concentration is regulated by adding magnesium such that the magnesium concentration is greater than 10 mg/L.

8. The process as claimed in one of claims 5 to 7 wherein the calcium concentration is regulated by adding calcium such that the calcium concentration is greater than 50 mg/L.

9. The process as claimed in one of the preceding claims wherein the hydraulic residence time in the high-rate algal pond varies from 1 to 12 days, typically is eight days in winter and four days in summer.

10. The process as claimed in one of the preceding claims wherein the high-rate algal pond comprises algae selected from the Chlorophyceae, Euglenophyceae, diatoms, Cyanophyceae and combinations thereof.

11. The process as claimed in one of the preceding claims wherein, prior to treatment c) of the wastewater in the aeration tank, the water and algae are separated.

12. The process as claimed in claim 11 wherein the algae collected during the separation are anaerobically digested.

13. The process as claimed in one of the preceding claims wherein the pond has a height varying from 10 to 70 cm and a length-to-width ratio varying from 6 to 10.

14. The process as claimed in one of the preceding claims wherein the sludge obtained after settling a') and/or separation d) is treated by a process incorporating liming or a process incorporating anaerobic digestion.

15. A wastewater treatment plant comprising from upstream to downstream:
a. a wastewater pretreatment unit comprising at least one screening means;
a', optionally a primary settling tank;
b. a high-rate algal pond in which the pretreated water circulates in a closed circuit and in which a mixture of bacteria and algae in culture is present, the pond comprising a water height varying from 10 to 70 cm;
b'. optionally a unit for separating algae and pond treated water;
c. an activated sludge aeration tank;
d. a device for separating treated water and sludge, preferably a clarifier.
